# EUROPEAN PATENT SPECIFICATION

(11) **EP 2 421 687 B1**
(45) Date of publication and mention of the grant of the patent: **23.04.2014**
(21) Application number: 10705356.3
(22) Date of filing: 24.02.2010
(51) Int. Cl.: B29C 33/40, C08G 59/32, C08G 59/50

(54) **METHOD OF MAKING CHEMICALLY RESISTANT MOULDS AND TOOLS AND CHEMICAL COMPOSITION FOR THE METHOD**
VERFAHREN ZUR HERSTELLUNG VON CHEMISCH BESTÄNDIGEN FORMEN UND WERKZEUGEN UND CHEMISCHE ZUSAMMENSETZUNG DAFÜR
PROCÉDÉ DE FABRICATION DE MOULES ET OUTILS CHIMIQUEMENT RÉSISTANTS ET COMPOSITION CHIMIQUE POUR LE PROCÉDÉ

(30) Priority: 24.04.2009 EP 09158740
(43) Date of publication of application: 29.02.2012
(73) Proprietor: Huntsman Advanced Materials (Switzerland) GmbH, 4057 Basel (CH)
(72) Inventor: HOWLAND, Duncan, F-68300 St. Louis (FR)
(74) Representative: Hoffmann, Daniele
(86) International application number: PCT/EP2010/052325
(87) International publication number: WO 2010/121853

(56) References cited:
- WO-A-02/20261
- WO-A-2006/024676
- WO-A-2008/100730
- US-A- 6 060 540
- JATIN R. THAKKAR ET AL: "Glass Fibre Reinforced Composites of Triglycidyl-p-aminophenol" BRITISH POLYMER JOURNAL, vol. 22, 1990, pages 143-146, XP002544371

## Description

### FIELD OF THE INVENTION

The present invention relates to a two-component curable composition comprising a resin component and a hardener component and to the use of the curable composition for making seamless moulds and tools.

### BACKGROUND OF THE INVENTION

Curable two-component compositions are used in a wide variety of fields, for example adhesives, fibre reinforced composites, modelling pastes, coatings, sealants, putties, mastics, stopping compounds, caulking materials, encapsulants and surface coatings such as paints. The curing time of such compositions after mixing of the components depends on many factors, e. g. the nature of the curable materials and the temperature. Examples of widely known 2-component resins systems include epoxy/amine; isocyanate/polyol and epoxy/anhydride systems and also hybrid systems such as epoxy;acrylate/amine and epoxy;isocyanate/polyol;amine systems.

Model making within the automotive, aerospace, rail, wind turbine and marine industries depends widely on such compositions. There is a need to produce dimensionally accurate master models, particularly of larger format. These models are used by engineers for the fabrication of production moulds for part manufacture. More and more, these industries seek to remove the master model step and directly fabricate functional moulds.

Moulds for use in the composite manufacture industry are often themselves made with composite materials, especially utilising thermoset resin compositions with fibre or mineral reinforcements.

Specifically, the moulds detailed in this invention are employed for making parts by curing liquid thermoset resins, which for example contain unsaturated polyester (UPE) or vinyl ester (VE) in solutions with reactive monomers like vinylic or acrylic monomers (in particular styrene) cured by free radical polymerisation. Curing of these unsaturated polyesters (UPE) or vinyl esters (VE) compositions can generally only be accomplished in the presence of these additional reactive unsaturated monomer like substituted or unsubstituted styrene, vinyl monomers, acrylates or methacrylates. However, theses reactive monomers can cause degradation of moulds.

Production of moulds typically requires a full scale master or model (often referred to as a plug) onto which the mould is formed, typically using liquid thermoset resins, by a process of lamination with fibre reinforcements, or casting with mineral filler reinforcements.

Seamless Modelling Pastes (SMP's) are used for production of master models. Until now, no satisfactory method existed for directly producing a mould (i.e. without the use of a master model) from SMP compositions, which offers sufficient chemical resistance to the reactive monomers employed in liquid thermoset resin compositions (especially styrene) so as to enable series part production of more than 1-5 parts. Formerly, chemical and physical attack of the SMP composition's surface took place during part manufacture, causing a degredation of surface quality, which increased strongly with the number of parts made. Chemical attack of this nature is widely accepted to come from the reactive monomers and low molecular weight solvents used in the formulation of thermoset resins. Chemical resistance is often measured using immersion testing of samples in a reactive monomer, such as is commonly used in thermoset resins. Absorption by samples immersed in styrene for 14 days can usefully indicate the resistance of the material to styrene attack: absorption is expressed as a percentage of sample weight. Existing formulations typically display a styrene absorption (14 days 40°C) of greater than 15% by weight.

In WO2006/024676 a composition for making high temperature resistant models and tools is disclosed. The composition contains an epoxy resin, a thixotropic agent and a hardener system comprising at least one polyethyleneimine, at least one other amine having at least two amino hydrogen groups and at least one other epoxy curative having latent reactivity, wherein components of the hardener system are present in an amount sufficient to effect cure of the epoxy resin.

WO03/051649 discloses another process for making models free of bond lines. In the claimed process a low density thixotropic curable paste is used which comprises a resin composition and microballoons. The resin may comprise an epoxy resin, a thixotropic agent and a hardener comprising at least one polyethyleneimine and at least one other amine having at least two amine hydrogen groups.

The chemical resistance to styrene and other low molecular weight monomers is poor. The cured compositions absorb styrene, with the consequence that the cured composition swells and cracking can be observed, causing further degredation.

Thus, there is a need for curable compositons useful for making models or tools having improved chemical resistance to low molecular weight monomers. Additionally, such compositions should have the required physical characteristics to enable the production of a seamless mould for moulding thermoset resin monomer solutions. A requirement for the curing process of curable compositions is that the heat of reaction is not too high, i.e. the peak exotherm during curing is low enough so as not to cause distortion or damage of the supporting sub-structure material. Furthermore, the composition should have a rheology such that the compositions may be applied to form a seamless film with non-slump properties, even when applied to a vertical surface at thickness up to 30mm, low shrinkage and exotherm during cure, good milling properties and mechanical resistance.

### SUMMARY OF THE INVENTION

The subject matter of the present invention is a method for producing a tool or mould comprising:
(A) application of a seamless modelling paste comprising at least one resin system (a) and at least one hardener system (b) onto a substrate to form a continuous film of curable material
(B) curing the seamless modelling paste,
characterized in that the resin system (a) comprises an epoxy resin (a1) having an average epoxy functionality above 2 and the hardener system (b) comprises an amine compound (b1) having an average amine functionality above 2.

A further Subject matter of present invention is a curable composition comprising
(a) a resin system comprising an epoxy resin (a1) having an average epoxy functionality above 2,
   and
(b) a hardener system comprising an amine compound (b1) having an average amine functionality above 2,
wherein the resin system (a) comprises an epoxy resin (a1) having an average epoxy functionality of ≥ 3, selected from polyfunctional glycidylamines, and
the hardener system (b) comprises an amine compound (b1) having an average amine functionality of ≥ 4,
and the use of said composition as a seamless modelling paste or for the preparation of seamless moulds, models and tools.

Surprisingly it has been found that methods for producing a tool or mould using the specified composition yield parts with superior properties. In particular the the chemical resistance was considerably improved.

The compostion according to the invention can be used as a seamless modelling paste and for the preparation of seamless moulds, models and tools. According to the invention ,the preferred components of the method are also the preferred components of the composition.

### DETAILED DESCRIPTION OF THE INVENTION

In the method according to the present invention a seamless modelling paste is used which comprises a two-component curable composition which comprises (a) a special resin system and (b) and a special hardener system.

The method of present invention may be conveniently applied using machine dispensing/ mixing equipment. In an additional step (C) of the method, the SMP layer is machined to the final form.

The resin system (a) may consist of one or more epoxy resins which are themselves liquid or may be a liquid mixture of one or more solid epoxy resins with one or more liquid epoxy resins or may be one or more solid epoxy resins dissolved in a diluent such as any diluent conventionally used in epoxy resin compositions.

The epoxy resin (a1) may be selected from any epoxy resins containing more than 2 functional groups in its molecule. In a preferred embodiment of present invention, the resin system (a) may comprise epoxy resins (a1) having an epoxy functionality of 3 or more. The epoxy resin (a1) having 3 or more functional groups is preferably selected from glycidylamines, more preferably from N,N,N',N'- tetraglycidyl-4,4'methylene bisbenzenamine, triglycidyl p-aminophenol, triglycidyl m-aminophenol or any mixture of these. Polyglycidyl ethers of bisphenol A and glycidylamines are especially preferred. Examples of suitable glycidylamines are Araldite^{®} MY 0600-CH, MY 721 and MY 0510 from Huntsman and Tetrad^{®} X and Tetrad^{®} C available from Misubushi Gas Chemicals Co.

Preferably, the resin system (a) further comprises an epoxy resin (a2) with an average functionality ≤ 2.

The epoxy resin (a2) is preferably selected from epoxy compounds which are mono or diglycidyl ethers of a polyhydric alcohol such as 1,4-butanediol or 1,3-propanediol or, preferably, a mono- or diglycidyl ether of a polyhydric phenol, for example a bisphenol such as bis(4-hydroxyphenyl)methane (bisphenol F) or 2,2-bis-(4-hydroxyphenyl)propane (bisphenol A), or a mono- or diglycidyl ether of a novolak formed from formaldehyde and a phenol, such as phenol itself or a cresol. Mixtures of these compounds can be used as well.

In a preferred embodiment the epoxy resin (a) is a mixture of epoxy resins having an epoxy functionality of 3 or more (a1) and mono- or difunctional epoxy resins (a2). The resin component comprises the epoxy resin (a1) preferably in an amount of at least 10 wt.-%, based on the total weight of the resin component.

It has been found that the the chemical resistance is significantly improved when the average epoxy functionality of the resin system is above 6.3 eq./kg based on the resin components.

In a preferred embodiment, the resin component (a) further comprises an acrylate and/or methacrylate monomer (a3) - denoted as (meth)acrylate. The (meth)acrylate monomer (a3) may be selected from esters of (meth)acrylic acid or oligomers thereof and is present in an amount of 1 to 20 wt.-%, based on the total weight of the resin system (a). Component (a3) is useful in reducing the peak exotherm temperature during curing.

The hardener system (b) comprises an amine compound (b1) having an average amine functionality above 2, preferably an average amine functionality ≥ 3, in particular ≥ 4.

The amine compound having an average amine functionality above 2, preferably 3 or more, is preferably selected from polyalkylenepolyamines. Preferred examples are diethylenetriamine, triethylenetetramine, tetraethylenepentamine, dipropylenetriamine or tripropylenetetramine; N-hydroxyalkyl derivatives of polyalkylene polyamines such as N-(hydroxyethyl) diethylenetriamine or mono-N-2-hydroxypropyl derivative of triethylenetetramine; polyoxyalkylenepolyamines such as polyoxyethylene- and polyoxypropylene triamines; cycloaliphatic polyamines having an amino or aminoalkyl group attached to the ring; aromatic polyamines; amine-terminated adducts of epoxy resins with aliphatic, cycloaliphatic or araliphatic amines as described above; N-aminoalkyl piperazines with three amino groups or more; and polyaminoamides, for example reaction products of polyalkylenepolyamines, such as those mentioned above, with polymerised unsaturated fatty acids, e.g. polymerised vegetable oil acids such as trimerised linoleic or ricinoleic acids. According to the invention any mixture of these amines may be used.

In a preferred embodiment of the method, the hardener system additionally comprises an amino compound having an average amine functionality ≤ 2. Compounds (b2) are preferably selected from alkylenemono- or diamines; polyalkylenemono- or diamines; N-hydroxyalkyl derivatives of polyalkylene; polyoxyalkylenemono- or diamines; N,N-dialkylalkylenemono- or diamines; cycloaliphatic mono- or diamines having an amino or aminoalkyl group attached to the ring; aromatic mono- or diamines; amine-terminated adducts of epoxy resins with aliphatic, cycloaliphatic or araliphatic mono- or diamines; N-aminoalkyl-piperazines; and mono-or diaminoamides or a mixture of two or more of such amines.

Aromatic, aliphatic and cycloaliphatic amine hardeners are usually preferred for use as component (b) of the composition. The amount of (b) preferably ranges from about 0.75 to 1.25 amino hydrogen equivalents per 1,2-epoxide equivalent of the epoxy resin (a). In a preferred embodiment of the present invention the hardener system (b) comprises a mixture of amine compounds, i.e. a mixture of mono-/diamine compounds and of polyamine compounds. The average amino functionality of the amino compounds present in the hardener system (b) is above 2.

The resin component (a) may further comprise a thixotropic agent. The thixotropic agent is preferably a thixotropic agent which relies largely on interparticle hydrogen bonding to achieve its thixotropic effect, especially a hydrophilic fumed silica or another silicate. The amount of thixotropic agent required to induce thixotropic properties may depend on the nature of the specific epoxy resin and specific thixotropic agent used. This amount is generally from 1 to 20%, preferably from 3 to 15%, by weight based on the weight of the resin component (1). This is a "physical" thixotropic agent.

Preferably, the composition contains also a thixotropic enhancing agent which increases (physical) thixotropy when mixed with the thixotropic agent. A preferred thixotropic enhancing agent is polyethyleneimine which may have a molecular weight (Mw) from 700 to 1000000 or more, preferably from 5000 to 1000000, especially from 25000 to 1000000, particularly 500000 to 1000000 and most preferably 500000 to 750000. Such polyethyleneimines are commercially available or may be prepared from ethyleneimine by known procedures.

In certain specific embodiments of the invention, the amount of polyethyleneimine is such that the epoxy resin composition does not flow prior to its gelation, which in some instances requires several hours. The amount of polyethyleneimine needed to impart non-flow properties for a given time can be readily determined by simple experiment. For compositions of the invention containing the especially preferred components an amount of polyethyleneimine from 0.2 to 2 parts by weight per 100 parts by weight of the epoxy resin is preferred.

The epoxy resin composition may be formed conveniently by stirring a preformed mixture of the components of the resin system (a) together with a preformed mixture of the hardener system (b). The thixotropic agent may also be conveniently present in the resin or hardener mixture.

The two-component curable composition prepared in accordance with the present invention may also contain additional ingredients, such as diluents, fillers (such as calcium carbonate), fibres, pigments, dyes, fire retardants, antifoaming agents, wetting agents and polymeric toughening agents. These auxiliary materials may be conveniently added with the resin or hardener component.

The two-component curable composition according to the invention is preferably used as a seamless modelling paste. Techniques for dispensing modelling pastes are known in the art, e.g. by using Tartler Nodopox machinery. Conveniently, separate drums are filled with the resin and hardener components. The application of low pressure via a follower plate to the drums facilitates pumping of the materials. Preferably, pumps deliver the resin and hardener from the drums to a mix block where the resin, and hardener are mixed. The residence time in the mix block, the speed of mechanical stirring and the length of the hose attached to the chamber influence the homogeneity of the mixture.

It is particularly preferred to use low viscosity resin mixtures, the preferred viscosity range is 1 to 1000 Pa·s at 25° C (TA Instruments AR-G2, 25°C, 20mm plate/ plate, shear rate 100s⁻¹). Too high a viscosity in the components results in a need for high pressure pumping to dispense the paste. Much higher viscosity compositions are those applied known in the art as patties, which are semi-solid and are neither pumpable nor machine dispensable.

Preferred compositions should have a temperature resistance in the range 60 to 130°C.

Preferably, the paste is used to create the mould by the production of a smooth and machineable top surface covering the support. A layer of the paste is dispensed onto the support structure surface with a high-output meter-mix machine in the form of a continuous layer covering the entire model, top surface as well as sides [sloping or vertical]. The paste is preferably applied at a thickness of about 5 mm to about 30 mm thick, more preferably at about 15 mm thick. It is required to exhibit good non-slump and sag resistance properties when applied on a vertical surface. Typically, a minimum sag resistance of a 25 mm thickness on a vertical surface is required. The paste is then cured and machined. The pastes according to the invention particularly give seamless bonding allow for smooth surfaces to produce high functionality moulds and tools.

Cure of the curable resin can be affected in accordance with conventional practice in the particular application. In general, the composition is allowed to cure at ambient temperature. Optionally, at this stage, the part may be machined to approximate dimensions, then post cured to effect full reaction, final machining to the required dimensions may then be performed. The surfaces may be treated to seal the surface or provide a non stick surface before the mould or tool is put into production.

In order to meet the overall requirements for an acceptable temperature resistant material, the cured composition should have a heat deflection temperature (HDT) over 50°C, and preferably over 70°C.

Machining or cutting can be carried out using conventional tools (e.g. lathe) or cutting machines, such as milling machines, machining centres and the like, in order to achieve the desired shape. The use of a computer numerical control (CNC) machine is preferred. The present invention is therefore suitable for the production of master models, moulds and tools.

It will be appreciated that the total fabrication process of a mould or tool using the method of the present invention is simplified, more economical and faster than a conventional method which requires additionally the fabrication of a master model, for example using metal, wood, plaster, mastics, fibre reinforced laminates and modelling pastes, and subsequently the fabrication of a mould. An additional and important advantage is that the resulting model surface over the whole area [top as well as vertical or sloping sides] is seamless and free of bondlines.

In addition to the advantages mentioned above (namely a faster process, better machinability, smoother surface characteristics, and greater overall efficiency), the paste used in the present invention exhibits low linear shrinkage and can be used to produce large moulds which are dimensionally very stable. The finished article has excellent edge strength, cured shore hardness, flexural strength, high heat deflection temperature and compressive strength, as well as a low thermal expansion coefficient.

The present invention will now be illustrated by reference to the following non-limiting examples. All parts and percentages are provided on a weight basis unless indicated otherwise.

### EXAMPLES

### Examples of the Invention

The tables given below show example formulations of typical seamless modelling pastes and comparative SMPs as described in earlier publications , plus details of this invention.

The following terminology is used:

### Mix Ratio

The ratio (given in volume and weight) of resin and hardener mixed together to make the cured samples.

### Peak Exotherm

The two components are mixed to give a paste-like composition (Seamless Modelling Paste = SMP) at a starting temperature of 23°C and then applied at 30mm thickness to an expanded polystyrene substrate (density 30kg/m⁻³) and placed in an oven at 40°C to cure. A thermocouple is inserted to measure the temperature at the centre of the paste layer. Peak exotherm is defined as the highest temperature measured in the SMP during the cure of the material.

### Density

Density of cured formulation is determined at 23°C (ISO 1183).

### Hardness

Shore D penetrometer (ISO 868).

### Glass Transition Temperature (Tg)

Measured by DSC, 10°C/ min on fully cured material (IEC 1006)

### Styrene Absorption Measures

Samples are cut to size (40 x 40 x 10 mm) and weighed on an accurate balance before being immersed in styrene for 14 days at 40°C. Following immersion, all samples are allowed to dry on absorbent paper for 1 hour at 23°C before reweighing. Absorption is expressed as a percentage of sample weight.

### Raw Materials Used

**Table 1**

| **Type** | **Name** | **Supplier** | **Purpose** |
|---|---|---|---|
| Bisphenol A epoxy resin | Araldite^{®} GY 240 | Huntsman | Standard BADGE epoxy resin |
| | Araldite^{®} GY 260 | | Standard BADGE epoxy resin |
| Multifunctional epoxy resin | Araldite^{®} MY 0510 | Huntsman | Triglycidyl ether of para-aminophenol. Epoxide functionality 3. |
| Acrylic monomer | M Cure^{®} 400 | Sartomer | Aliphatic acrylate monomer |
| Benzyl alcohol | Benzyl alcohol | Numerous | Diluent |
| Aliphatic polyether amine | Jeffamine^{®} D-230 | Huntsman | Di-functional aliphatic polyether amine curing agent |
| Triethylene tetramine | Aradur^{®} HY 951 | Huntsman | Tetra-functional amine curing agent |
| Wetting agent | Byk^{®} W969 | Byk Chemie | Wetting agent |
| Antifoam agent | Antifoam^{®} MSA | Dow Corning | Prevents foaming |
| Polyethylene imine | HM Polymin Lupasol^{®} P | BASF | Enhancer for fumed silica |
| Polyvinyl Butyrate | Mowital^{®} B75 H | Kuraray | Viscosity modifier |
| Fumed Silica | Aerosil^{®} 380 | Degussa | Thixotrope agents |
| | Cabosil^{®} TS720 | Cabosil | |
| Mineral filler | Durcal^{®} 5 | Omya | Calcium carbonate filler |
| Glass microspheres | Scotchlite^{®} K25 | 3M | Hollow micro spheres |
| | Sillite^{®} S60 | Sil-Trade | |

**Table 2**

| **Examples 1 and 2: typical epoxy seamless modelling pastes (**WO03051649**); comparative** | | | | | |
|---|---|---|---|---|---|
| **Example 3: High temperature resistance SMP (**WO06024676**), comparative** | | | | | |
| **Resin System (parts by weight)** | | | **Comp. Ex. 1** | **Comp. Ex. 2** | **Comp. Ex. 3** |
| Bisphenol A epoxy resin | | | 50 | 46 | 20 |
| Bisphenol F epoxy resin | | | | 6 | |
| MY 0510 multifunctional epoxy resin | | | | | 42 |
| Reactive diluents | | | 2.5 | 4 | |
| Non-reactive diluents | | | 5 | 2.5 | |
| Acrylate monomer | | | 5 | | |
| Calcium stearate | | | 4 | | 4 |
| PTFE Powder | | | | | 4 |
| Non-reactive colorants | | | 1.5 | 2 | |
| Mineral filler | | | 25 | 23 | 10 |
| Thixotropic agent | | | 5 | 1.5 | 6 |
| Thermoplastic hollow spheres | | | 2 | | |
| Glass hollow spheres | | | | 15 | 14 |

| Hardener System (parts by weight) | | | | | |
|---|---|---|---|---|---|
| Aliphatic polyether amine | | | | 39 | 24 |
| Cycloaliphatic amine / bis A epoxy adduct | | | 25 | | |
| Diphenyl diamino sulphone | | | | | 8 |
| Diethyltoluene diamine | | | | | 22 |
| Polyol | | | 25 | | |
| Non-reactive diluents | | | 6 | 5 | |
| Silicone surfactant | | | 0.02 | 0.3 | |
| PTFE powder | | | | | 4 |
| Mineral filler | | | 39 | 33 | 27 |
| Thixotropic agent | | | 3 | 7.7 | 3 |
| Thermoplastic hollow spheres | | | 1.98 | | |
| Glass hollow spheres | | | | 15 | 12 |
| Resin : hardener ratio (parts by weight) | | | 100 : 100 | 100 : 50 | 100 : 50 |
| Resin: hardener ratio (parts by volume) | | | 100 : 100 | 100 : 50 | 100 : 50 |
| Peak exotherm | | | 67°C | 85°C | 103°C |
| Density 23°C | | | 0.75 gcm⁻³ | 0.9 gcm⁻³ | 1.0 gcm⁻³ |
| Shore D hardness 23°C | | | 60 | 70 | 80 |
| Tg Max (DSC) | | | 71°C | 60°C | 209°C |
| Styrene immersion: 14 days at 40°C | RT cure (23°C) | Styrene absorption (% by weight) | 29.8% | 19.4% | 4.42% |
| | | Visual aspect | Severe swelling | Completely cracked/ broken | Some cracking |
| | RT cure + 12h 60°C | Styrene absorption (% by weight) | 29.6% | 19.0% | 1.68% |
| | | Visual aspect | Severe swelling | Completely cracked/ broken | Some cracking |

### Formulations 1-5 : examples of invention (Table 3)

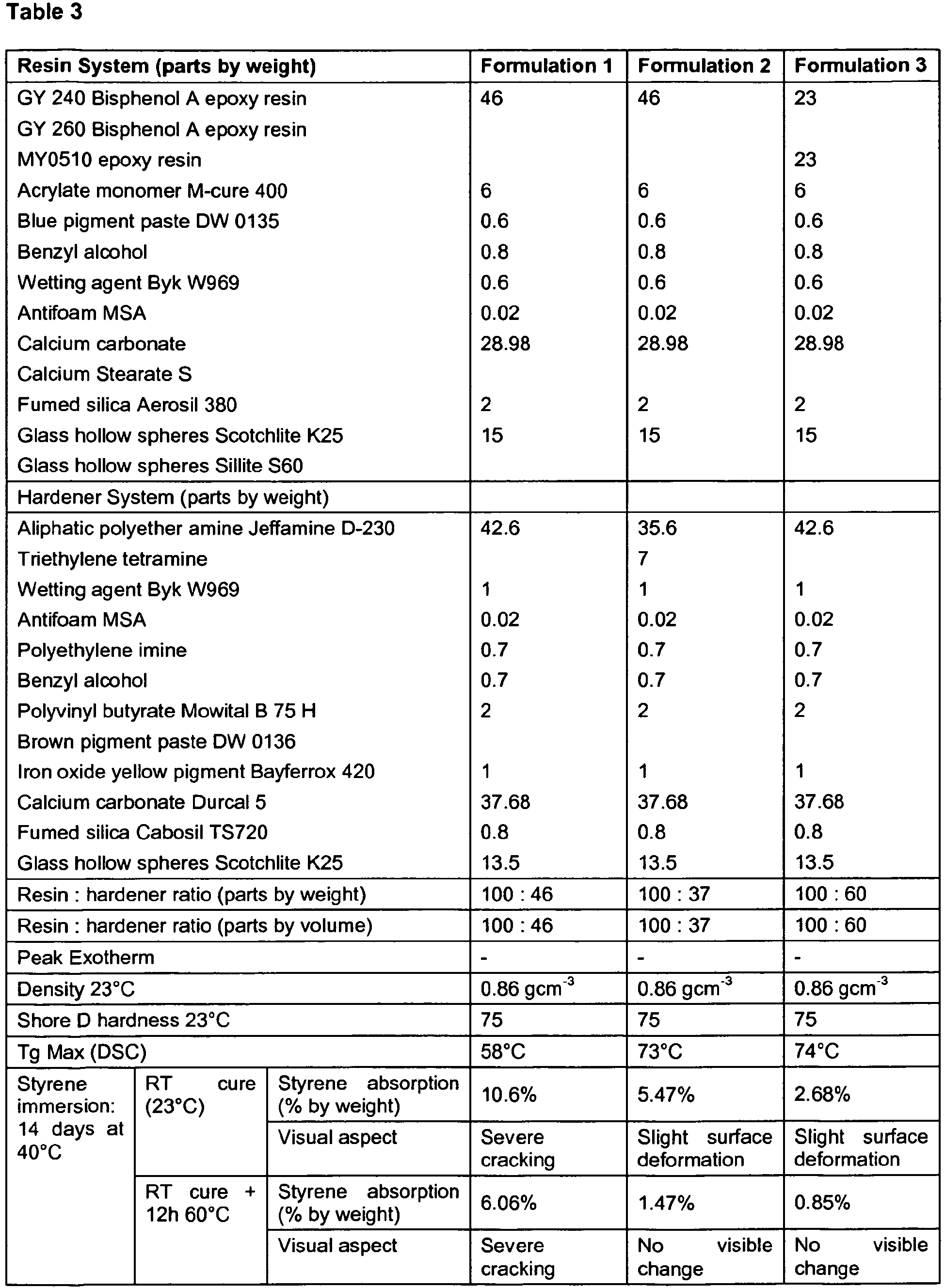

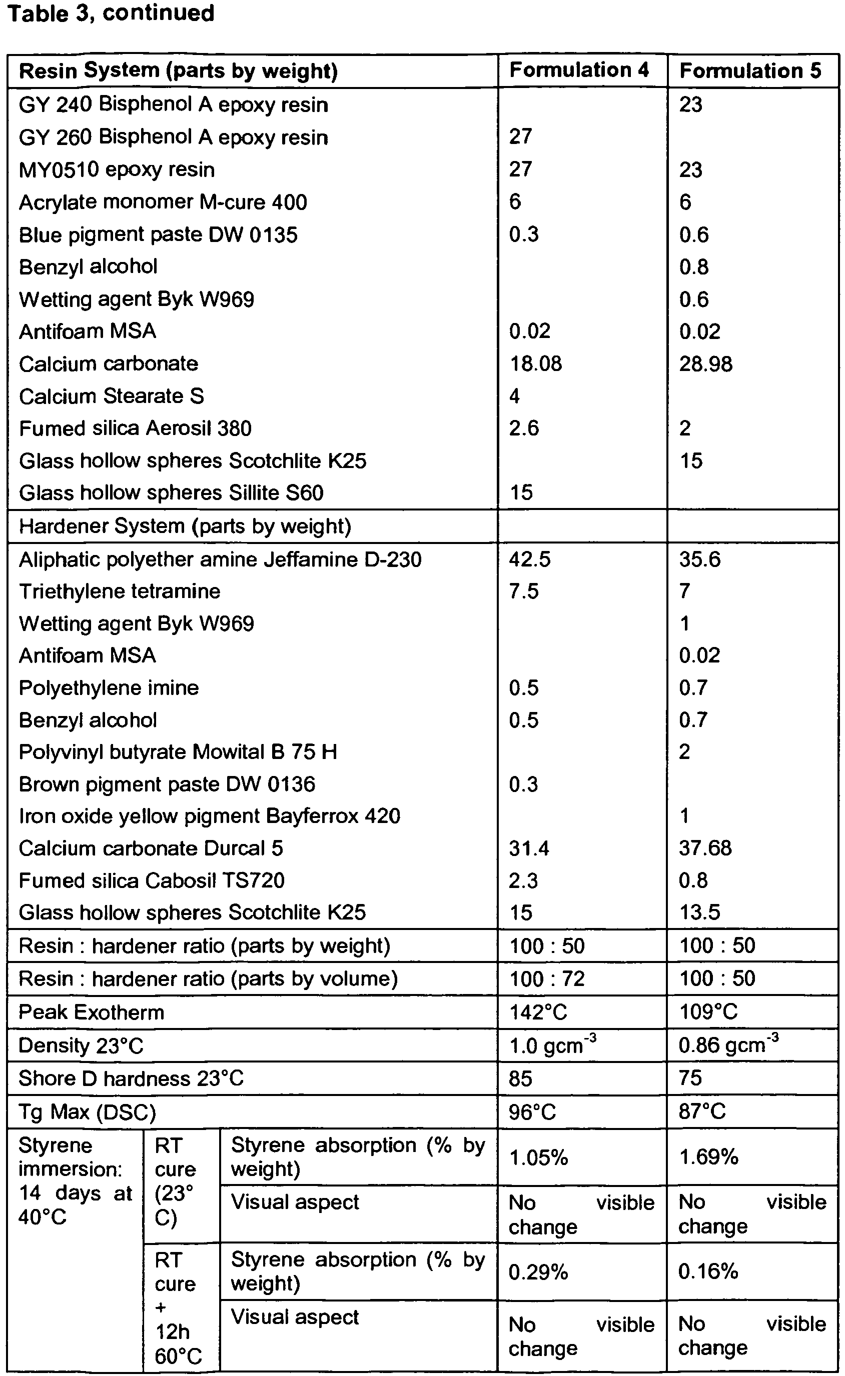

**Comparative Examples 1 and 2** (standard SMP pastes) show styrene absorption in the order of 20-30%, and the samples showed heavy cracking after immersion.

**Comparative Example 3** (high temperature resistance SMP) shows much lower styrene absorption, but is very brittle when cured at low temperatures (20°C to 60°C), and tends to break in use. Some cracking is also visible after immersion. A minimum post-cure temperature of 140°C is necessary in order to make the cured paste dimensionally stable, and therefore suitable for producing precision parts. This high post-cure temperature makes this product unsuitable for a range of applications where only low to medium temperatures can be achieved (20°C to 60°C).

**Formulation 1** is an improvement of a standard SMP paste, not containing any diluents. The styrene absorption is significantly reduced compared to the standard examples. However, the composition shows severe cracking after styrene immersion.

**Formulations 2 and 3** contain a proportion either of high functionality (i.e. functionality >2) amine or epoxy resin respectively. The styrene absorption is reduced in both cases compared to formulation 1. The surface aspect is also much improved after immersion.

**Formulation 4** contains both the high functionality resin and hardener, and offers a further reduction of styrene absorption compared to formulations 2 and 3. No visible change of the immersed samples was visible after 14 days immersion at 40°C.

The liquid (uncured) properties of the resin, hardener and mixed paste are such as to render it suitable for pumping and mixing in specialist application machines as are commonly employed in the application of SMP. However, the product mix ratio by volume (100 resin: 72 hardener) is not a desirable ratio for use on pumping/ dosing machines.

The Tg of the formulation is such that the formulation is able to withstand the temperatures encountered in the moulding of unsaturated polyester and other liquid thermoset resins without deforming, which is important for a tool.

Exotherm and hardness of the formulation are somewhat high, which may limit the usefulness of this formulation in practice. High exotherm in thick layer can cause distortion and cracking, so application thickness of this formulation is likely to be rather limited. High hardness makes the formulation difficult to mill to the desired final dimensions, which is undesirable for this type of product.

**Formulation 5** contains both the high functionality resin and hardener, and has similar styrene absorption as formulation 4. No visible change of the immersed samples was visible after 14 days immersion at 40°C.

The liquid properties of the two components still make this formulation suitable for pumping and application. Moreover, the mixing ratio is improved to 100 resin : 50 hardener by weight and volume, making it highly suitable for pumping/ dosing machines.

The density of this formulation is lower than formulation 4, which reduces the exotherm of the material during cure, and also the hardness, making it easier to mill to final dimensions. These characteristics are beneficial to the application of the material to produce seamless moulds.

The experimental results for formulation 5 indicate the excellent performance characteristics, notably a rheology and mix ratio suitable for machine pumping and mixing, low styrene absorption, lack of deformation after immersion and good temperature resistance, all combined with the ability to use the product with a cure temperature of only 20-60°C.

## Claims

1. A method of producing a tool or mould comprising:
(A) application of a seamless modelling paste comprising at least one resin system (a) and at least one hardener system (b) onto a substrate to form a continuous film of curable material
(B) curing the seamless modelling paste
**characterized in that** the resin system (a) comprises an epoxy resin (a1) having an average epoxy functionality above 2 and the hardener system (b) comprises an amine compound (b1) having an average amine functionality above 2.

2. The method according to claim 1 comprising the additional step (C) machining of the SMP layer to the final form.

3. The method according to at least one of the preceding claims, wherein the resin system (a) comprises an epoxy resin (a1) having an average epoxy functionality of ≥ 3, preferably selected from polyfunctional glycidylamines.

4. The method according to claim 3, **characterized in that** the glycidylamine is selected from N,N,N',N'-tetraglycidyl-4,4'methylene bisbenzenamine, triglycidyl p-aminophenol, triglycidyl m-aminophenol or any mixture thereof.

5. The method according to at least one of the preceding claims, **characterized in that** resin system (a) further comprises an epoxy resin (a2) with an average functionality ≤ 2, preferably selected from mono- or diglycidyl ethers of a polyhydric alcohol, of a polyhydric phenol, of a novolak formed from formaldehyde and a phenol, or any mixture thereof.

6. The method according to at least one of the preceding claims, **characterized in that** resin system (a) is a mixture of epoxy resins having an epoxy functionality of 3 or more (a1) and a mono- or difunctional epoxy resin or a mixture of mono- or difunctional epoxy resins (a2).

7. The method according to at least one of the preceding claims, wherein the resin system (a) comprises an average epoxy functionality above 6 epoxy equivalents per kilo, preferably ≥ 6.3 epoxy equivalents.

8. The method according to at least one of the preceding claims, **characterized in that** the resin system additionally comprises at least one (meth)acrylate monomer (a3) in an amount of 1 to 20 wt.-%, based on the total weight of the resin system (a).

9. The method according to at least one of the preceding claims, **characterized in that** the hardener system (b) comprises an amine compound (b1) having an average amine functionality of ≥ 3, preferably ≥ 4.

10. The method according to at least one of the preceding claims **characterized in that** the amine compound (b1) having an average amine functionality ≥ 3 is selected from polyalkylenepolyamines.

11. The method according to claim 10 **characterized in that** the polyalkylenepolyamines are selected from diethylenetriamine, triethylenetetramine, tetraethylenepentamine, dipropylenetriamine, tripropylenetetramine; N-hydroxyalkyl derivatives of polyalkylene polyamines, preferably N-(hydroxyethyl) diethylenetriamine or mono-N-2-hydroxypropyl derivative of triethylenetetramine; polyoxyalkylenepolyamines, preferably polyoxyethylene- and polyoxypropylene triamines; cycloaliphatic polyamines having an amino or aminoalkyl group attached to the ring; aromatic polyamines; amine-terminated adducts of epoxy resins with aliphatic, cycloaliphatic or araliphatic polyamines; N-polyaminoalkyl-piperazines; polyaminoamides,; and any mixture thereof..

12. The method according to at least one of the preceding claims, **characterized in that** the hardener system (b) further comprises an amino compound (b2) having an average amine functionality ≤ 2 selected from alkylenediamines; polyalkylenemono- or diamines; N-hydroxyalkyl derivatives of polyalkylene; polyoxyalkylenemono- or diamines; N,N-dialkylalkylenediamines; cycloaliphatic mono- or diamines having an amino or aminoalkyl group attached to the ring; aromatic mono - or diamines; amine-terminated adducts of epoxy resins with aliphatic, cycloaliphatic or araliphatic mono or diamines; N-aminoalkyl piperazines; and mono- or diaminoamides or a mixture of two or more of such amines.

13. A curable composition comprising
(a) a resin system comprising an epoxy resin (a1) having an average epoxy functionality above 2,
and
(b) a hardener system comprising an amine compound (b1) having an average amine functionality above 2,
wherein the resin system (a) comprises an epoxy resin (a1) having an average epoxy functionality of ≥ 3, selected from polyfunctional glycidylamines, and
the hardener system (b) comprises an amine compound (b1) having an average amine functionality of ≥ 4.

14. Use of a composition according to claim 13 as a seamless modelling paste.

15. Use of a composition according to claim 13 for the preparation of seamless moulds, models and tools.

## Patentansprüche

1. Verfahren zur Herstellung eines Werkzeugs oder einer Form umfassend:
(A) Auftragen einer nahtlosen bzw. fugenlosen Modellpaste, umfassend mindestens ein Harzsystem (a) und mindestens ein Härtersystem (b), auf ein Substrat unter Bildung eines kontinuierlichen Films aus härtbarem Material
(B) Härten der nahtlosen bzw. fugenlosen Modellpaste,
**dadurch gekennzeichnet, dass** das Harzsystem (a) ein Epoxyharz (a1) mit einer mittleren Epoxyfunktionalität oberhalb von 2 umfasst und das Härtersystem (b) eine Amin-Verbindung (b1) mit einer mittleren Aminfunktionalität oberhalb von 2 umfasst.

2. Verfahren nach Anspruch 1, umfassend den zusätzlichen Schritt (C) der Verarbeitung der SMP Schicht in die fertige Form.

3. Verfahren nach einem der vorangehende Ansprüche, worin das Harzsystem (a) ein Epoxyharz (a1) mit einer mittleren Epoxyfunktionalität von ≥ 3, vorzugsweise ausgewählt aus polyfunktionellen Glycidylaminen, umfasst.

4. Verfahren nach Anspruch 3, **dadurch gekennzeichnet, dass** das Glycidylamin ausgewählt ist aus N,N,N',N'-Tetraglycidyl-4-4'-methylenbisbenzolamin, Triglycidyl-p-aminophenol, Triglycidyl-m-aminophenol oder irgendeiner Mischung davon.

5. Verfahren nach einem der vorangehenden Ansprüche, **dadurch gekennzeichnet, dass** das Harzsystem (a) weiterhin ein Epoxyharz (a2) mit einer mittleren Funktionalität ≤ 2 umfasst, vorzugsweise ausgewählt aus Mono- oder Diglycidylethern eines mehrwertigen Alkohols, eines mehrwertigen Phenols, eines aus Formaldehyd und einem Phenol geformten Novolaks oder irgendeiner Mischung davon, umfasst.

6. Verfahren nach einem der vorangehenden Ansprüche, **dadurch gekennzeichnet, dass** das Harzsystem (a) eine Mischung aus Epoxyharzen mit einer Epoxyfunktionalität von 3 oder mehr (a1) und eines mono- oder difunktionellen Epoxyharzes oder einer Mischung von mono- oder difunktionellen Epoxyharzen (a2) ist.

7. Verfahren nach einem der vorangehenden Ansprüche, worin das Harzsystem (a) eine mittlere Epoxyfunktionalität oberhalb von 6 Epoxyäquivalenten pro Kilo, vorzugsweise ≥ 6,3 Epoxyäquivalenten umfasst.

8. Verfahren nach einem der vorangehenden Ansprüche, **dadurch gekennzeichnet, dass** das Harzsystem zusätzlich mindestens ein (Meth)Acrylatmonomer (a3) in einer Menge von 1 bis 20 Gew.% auf der Basis des Gesamtgewichts des Harzsystems (a) umfasst.

9. Verfahren nach einem der vorangehenden Ansprüche, **dadurch gekennzeichnet, dass** das Härtersystem (b) eine Aminverbindung (b1) mit einer mittleren Aminfunktionalität von ≥ 3, vorzugsweise ≥ 4 umfasst.

10. Verfahren nach einem der vorangehenden Ansprüche, **dadurch gekennzeichnet, dass** die Aminverbindung (b1) eine mittlere Aminfunktionalität ≥ 3 aufweist und ausgewählt ist aus Polyalkylenpolyaminen.

11. Verfahren nach Anspruch 10, **dadurch gekennzeichnet, dass** die Polyalkylenpoly-amine ausgewählt sind aus Diethylentriamin, Triethylentetramin, Tetraethylenpentamin, Dipropylentriamin, Tripropylentetramin; N-Hydroxyalkyl-Derivaten von Polyalkylenpolyaminen, vorzugsweise N-(Hydroxyethyl)diethylentriamin oder Mono-N-2-hydroxypropyl-Derivat von Triethylentetramin; Polyoxyalkylenpolyaminen, vorzugsweise Polyoxyethylen- und Polyoxypropylentriaminen; cycloalphatischen Polyaminen mit einer Amino- oder Aminoalkylgruppe am Ring; aromatischen Polyaminen; aminterminierten Addukten von Epoxyharzen mit aliphatischen, zykloaliphatischen oder araliphatischen Polyaminen; N-Polyaminoalkylpiperazinen; Polyaminoamiden und irgendeiner Mischung davon.

12. Verfahren nach einem der vorangehenden Ansprüche, **dadurch gekennzeichnet, dass** das Härtersystem (b) weiterhin eine Aminoverbindung (b2) mit einer mittleren Aminfunktionalität ≤ 2 umfasst, ausgewählt aus Alkylendiaminen; Polyalkylenmonooder -dianminen; N-Hydroxyalkylderivaten von Polyalkylen; Polyoxyalkylenmono- o-der diaminen; N,N-Dialkylalkylendiaminen; zykloaliphastischen Mono- oder Diaminen mit einer Amino- oder Aminoalkylgruppe am Ring; aromatischen Mono- oder Diaminen; aminterminierten Addukten von Epoxyharzen mit aliphatischen, zykloaliphatischen oder araliphatischen Mono- oder Diaminen; N-Aminoalkylpiperazinen; und Mono- oder Diaminoamiden oder einer Mischung von zwei oder mehreren solcher Amine.

13. Härtbare Zusammensetzung, umfassend
(a) ein Harzsystem, umfassend ein Epoxyharz (a1) mit einer mittleren Epoxyfunktionalität oberhalb von 2,
und
(b) ein Härtersystem umfassend eine Aminverbindung (b1) mit einer mittleren Aminfunktionalität oberhalb von 2,
worin das Harzsystem (a) ein Epoxyharz (a1) mit einer mittleren Epoxyfunktionalität von ≥ 3 umfasst, ausgewählt aus polyfunktionellen Glycidylaminen, und
das Härtersystem (b) eine Aminverbindung (b1) mit einer mittleren Aminfunktionalität von ≥ 4 umfasst.

14. Verwendung einer Zusammensetzung nach Anspruch 13 als fugenlose bzw. nahtlose Modellpaste.

15. Verwendung einer Zusammensetzung nach Anspruch 13 zur Herstellung von nahtlosen bzw. fugenlosen Formen, Modellen und Werkzeugen.

## Revendications

1. Procédé de fabrication d'un outil ou d'un moule comprenant :
(A) l'application d'une pâte de modelage sans raccord comprenant au moins un système de résine (a) et au moins un système durcisseur (b) sur un substrat pour former un film continu de matière durcissable ;
(B) le durcissement de la pâte de modelage sans raccord
**caractérisé par le fait que** le système de résine (a) comprend une résine époxy (a1) ayant une fonctionnalité époxy moyenne supérieure à 2 et le système durcisseur (b) comprend un composé amine (b1) ayant une fonctionnalité amine moyenne supérieure à 2.

2. Procédé selon la revendication 1, comprenant l'étape additionnelle (C) d'usinage de la couche de pâte de modelage sans raccord (SMP) à la forme finale.

3. Procédé selon au moins l'une des revendications précédentes, dans lequel le système de résine (a) comprend une résine époxy (a1) ayant une fonctionnalité époxy moyenne de ≥ 3, de préférence choisie parmi les glycidylamines polyfonctionnelles.

4. Procédé selon la revendication 3, **caractérisé en ce que** la glycidylamine est choisie parmi la N,N,N',N'-tétraglycidyl-4,4'méthylène bisbenzènamine, le triglycidyl p-aminophénol, le triglycidyl m-aminophénol ou tout mélange de ceux-ci.

5. Procédé selon au moins l'une des revendications précédentes, **caractérisé en ce que** le système de résine (a) comprend en outre une résine époxy (a2) ayant une fonctionnalité moyenne ≤ 2, de préférence choisie parmi les mono- ou diglycidyl éthers d'un alcool polyvalent, d'un phénol polyvalent, d'une novolaque formée à partir de formaldéhyde et d'un phénol ou de tout mélange de ceux-ci.

6. Procédé selon au moins l'une des revendications précédentes, **caractérisé par le fait que** le système de résine (a) est un mélange de résines époxy ayant une fonctionnalité époxy de 3 ou plus (a1) et d'une résine époxy mono- ou difonctionnelle ou d'un mélange de résines époxy mono- ou difonctionnelles (a2).

7. Procédé selon au moins l'une des revendications précédentes, dans lequel le système de résine (a) comprend une fonctionnalité époxy moyenne au-dessus de 6 équivalents époxy par kilo, de préférence ≥ 6,3 équivalents époxy.

8. Procédé selon au moins l'une des revendications précédentes, **caractérisé par le fait que** le système de résine comprend en outre au moins un monomère (méth)acrylate (a3) dans une quantité de 1 à 20 % en poids sur la base du poids total du système de résine (a).

9. Procédé selon au moins l'une des revendications précédentes, **caractérisé par le fait que** le système de durcisseur (b) comprend un composé amine (b1) ayant une fonctionnalité amine moyenne de ≥ 3, de préférence ≥ 4.

10. Procédé selon au moins l'une des revendications précédentes, **caractérisé par le fait que** le composé amine (b1) ayant une fonctionnalité amine moyenne ≥ 3 est choisi parmi les polyalkylènepolyamines.

11. Procédé selon la revendication 10 **caractérisé par le fait que** les polyalkylènepolyamines sont choisies parmi la diéthylènetriamine, la triéthylènetétramine, la tétraéthylènepentamine, la dipropylènetriamine, la tripropylènetétramine ; les dérivés N-hydroxyalkylés de polyalkylène polyamines, de préférence la N-(hydroxyéthyl) diéthylènetriamine ou les dérivés mono-N-2-hydroxypropylés de triéthylènetétramine ; les polyoxyalkylènepolyamines, de préférence les polyoxyéthylène- et polyoxypropylène triamines ; les polyamines cycloaliphatiques ayant un groupe amino ou aminoalkyle attaché au noyau ; les polyamines aromatiques ; les produits d'addition à terminaison amine de résines époxy avec les polyamines aliphatiques, cycloaliphatiques ou araliphatiques ; les N-polyaminoalkyl-pipérazines ; les polyaminoamides ; et tout mélange de ceux-ci.

12. Procédé selon au moins l'une des revendications précédentes, **caractérisé par le fait que** le système de durcisseur (b) comprend en outre un composé amino (b2) ayant une fonctionnalité amine moyenne ≤ 2, choisi parmi les alkylènediamines ; les polyalkylènemono-ou diamines ; les dérivés N-hydroxyalkylés de polyalkylène ; les polyoxyalkylènemono- ou diamines ; les N,N-dialkylalkylènediamines ; les mono- ou diamines cycloaliphatiques ayant un groupe amino ou aminoalkyle attaché au noyau ; les mono- ou diamines aromatiques ; les produits d'addition à terminaison amine de résines époxy avec des mono- ou diamines aliphatiques, cycloaliphatiques ou araliphatiques ; les N-aminoalkyl pipérazines ; et les mono- ou diaminoamides ou un mélange d'au moins deux de ces amines.

13. Composition durcissable comprenant !
(a) un système de résine comprenant :
une résine époxy (a1) ayant une fonctionnalité époxy moyenne supérieure à 2, et
(b) un système durcisseur comprenant :
un composé amine (b1) ayant une fonctionnalité amine moyenne supérieure à 2,
le système de résine (a) comprenant une résine époxy (a1) ayant une fonctionnalité époxy moyenne de ≥ 3, choisie parmi les glycidylamines polyfonctionnelles ; et
le système durcisseur (b) comprenant un composé amine (b1) ayant une fonctionnalité amine moyenne de ≥ 4.

14. Utilisation d'une composition selon la revendication 13 comme pâte de modelage sans raccord.

15. Utilisation d'une composition selon la revendication 13 pour la préparation de moules, modèles et outils sans raccord.
